# EUROPEAN PATENT SPECIFICATION

(11) **EP 2 306 586 B1**
(45) Date of publication and mention of the grant of the patent: **02.04.2014**
(21) Application number: 09773565.8
(22) Date of filing: 03.07.2009
(51) Int. Cl.: H01Q 1/38, G06K 19/07, H01Q 5/00, H02J 17/00, G06K 19/077

(54) **WIRELESS IC DEVICE**
DRAHTLOSE INTEGRIERTE SCHALTUNG
DISPOSITIF À CIRCUIT INTÉGRÉ SANS FIL

(30) Priority: 04.07.2008 JP 2008175460
(43) Date of publication of application: 06.04.2011
(73) Proprietor: Murata Manufacturing Co. Ltd., Kyoto 617-8555 (JP)
(72) Inventor: IKEMOTO, Nobuo, Nagaokakyo-shi Kyoto 617-8555 (JP)
(74) Representative: Schenk, Markus
(86) International application number: PCT/JP2009/062181
(87) International publication number: WO 2010/001987

(56) References cited:
- EP-A1- 1 862 951
- EP-A1- 2 071 495
- EP-A1- 2 296 226
- WO-A1-2007/086130
- JP-A- 11 088 241
- JP-A- 2000 242 754
- JP-A- 2001 076 111
- JP-A- 2005 135 132
- JP-A- 2006 339 964
- JP-A- 2007 028 002
- US-A1- 2007 063 057

## Description

### Technical Field

This invention relates to radio IC devices, and particularly to a radio IC device based on a radio-frequency identification (RFID) system for noncontact data communication using electromagnetic waves.

### Background Art

Recently, RFID systems for transmitting information by noncontact communication between a reader/writer that generates an induction field and an RFID tag attached to an article and storing predetermined information have been used as article management systems.

Patent Document 1 discloses an RFID antenna supporting frequencies used in RFID, namely, 13.56 MHz, 950 MHz, and 2.45 GHz.

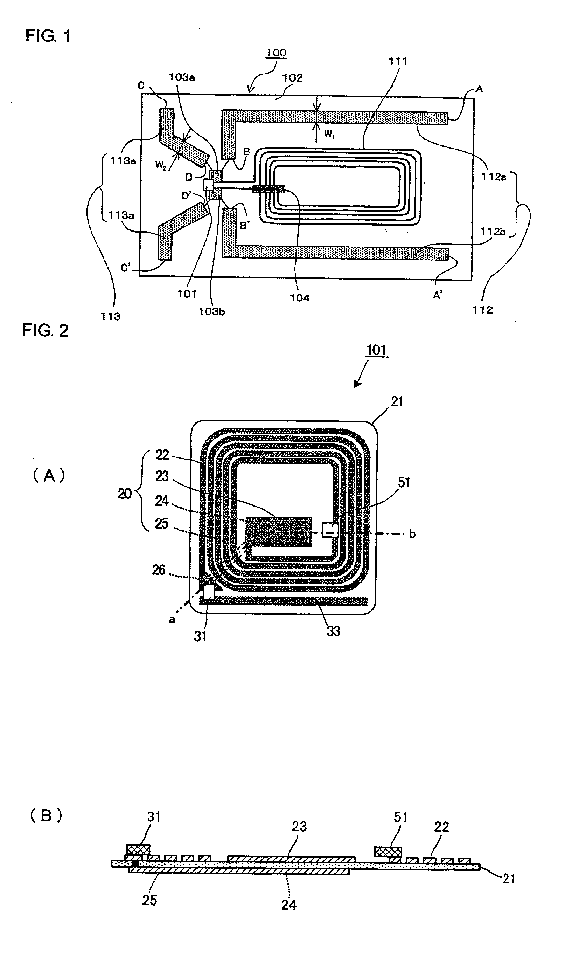

Fig. 1 is a diagram showing the configuration of a noncontact IC tag using the RFID antenna of Patent Document 1. As shown in Fig. 1, antenna portions 111, 112, and 113 and land portions 103a and 103b are formed on a base substrate 102 formed of, for example, resin or paper. The antenna portion 111 is formed of a coil of conductive material. The antenna portion 112 is formed of two L-shaped conductors 112a and 112b formed at a predetermined distance from each other so as to surround the antenna portion 111. The antenna portion 113 is formed of two conductors 113a and 113b formed at a predetermined distance outside the antenna portion 112. The land portions 103a and 103b are connected to the antenna portions 111 to 113. An IC chip 101 is mounted on the land portions 103a and 103b.

[Patent Document 1] Japanese Unexamined Patent Application Publication No. 2005-252853

An RFID antenna having the structure as shown in Patent Document 1, however, has a problem in that the antenna size is large because three different antennas need to be disposed on the same substrate. Another problem is that, if a plurality of antennas are disposed in proximity and one of them is used for radio communication, the other antennas interfere with the communication, thus leading to unstable communication.

EP 1 862 951 A1 describes a first inlet is formed by patterning a first antenna mounting a first IC chip in a loop shape near in an external periphery area of an IC card, the card being structured by laminated both planes of the first inlet with outer package material such as PET. A compact inlet including a second antenna, a second IC chip and a matching circuit is attached to a top or bottom surface of the card, crossing at a right angle a portion of the first loop antenna. With this antenna layout, the second antenna can be made compact to 0.2 or shorter by using the first antenna as an auxiliary antenna, and the card can operate without interference between the first antenna and second antenna.

EP 2 296 226 A1 is a prior art document in accordance with Article 54(3) EPC and describes a radio communication device which is provided with an RFID tag function which can ensure the mounting area of each antenna as large as possible, and which is sharable with an LF band RFID system or an HF band RFID system and a UHF band RFID system, while having a communication range equivalent to the communication range of each of an LF band an HF band and a UHF band. The device is provided with an integrated circuit having a communication function in a first frequency band, a conductive object connected to one of input and output terminals of the integrated circuit, an integrated circuit having a communication function in a second frequency band, and a second conductive object connected between input and output terminals of the integrated circuit. The second conductive object is composed of a spiral conductive object. The other of the input output terminals of the integrated circuit is connected to a part of the spirally wound conductive object.

EP 2 071 495 A1 is a prior art document in accordance with Article 54(3) EPC and describes a wireless IC device having a spiral line electrode part and a capacitance electrode part connected to an inner circumferential end thereof which are formed on the upper surface of a sheet-shaped base. A capacitance electrode part opposed to the capacitance electrode part and a crossing line electrode for connecting between a front-back connection part and the capacitance electrode part are formed on the lower surface of the base. The front-back connection part electrically connects the outer circumferential end of the spiral line electrode part and an end of the crossing line electrode. A radio IC is mounted so that terminal electrodes are electrically connected to this semiconductor wafer and an end of the radiant electrode. An electrode for both radiation and resonance formed by the line electrode part, capacitance electrode parts, and crossing line electrode acts as a resonant circuit of a resonant tag, as well as acts as one radiant electrode for serving as an RF-ID tag.

### SUMMARY OF THE INVENTION

It is an object of this invention to provide a radio IC device that supports RF signals in a plurality of frequency bands for RFID tags and that is compact and has superior radiation characteristics.

This object is achieved by a radio IC device according to Claim 1 or Claim 11.

The invention provides a radio IC device which allows for power reception and communication using RF signals in a plurality of frequency bands for RFID tags, thus enabling efficient communication, allows for a reduction in overall size, and provides superior radiation characteristics.

The first radio IC and the second radio IC may be configured in the same package.

This allows a reduction in packaging costs.

The first frequency band may be lower than the second frequency band, and the first radiation electrode portion is a magnetic-field radiation electrode portion having a resonant frequency higher than the first frequency band and functioning as a magnetic-field radiation electrode for an RF signal in the first frequency band.

This configuration allows the magnetic-field radiation electrode to function as a magnetic-field antenna in the first frequency band and as an electric-field antenna in the second frequency band to avoid a deterioration in radiation characteristics due to interference between antennas so that a radio IC device with superior radiation characteristics can be configured.

The magnetic-field radiation electrode portion may be used to receive an RF signal in the first frequency band and to transmit and receive an RF signal in the second frequency band.

This configuration allows a reduction in overall size because the RFID tag antenna for the first frequency and the RFID tag antenna for the second frequency need not be separately provided.

The resonant frequency of the second radiation electrode portion may be lower than the second frequency band.

This configuration allows the radiation electrode to function as an equivalent single radiation electrode at the frequency for the second RFID tag, thus improving radiation characteristics as an RFID tag.

The first radiation electrode portion may include a line electrode and capacitor electrodes forming a capacitor between ends of the line electrode.

This configuration allows a reduction in resonant frequency per area occupied by the first RFID tag radiation electrode by lumping the inductance L of the line electrode portion and the capacitance C of the capacitor electrode portion. Conversely, the configuration allows a reduction in occupied area per predetermined resonant frequency. Thus, the overall size can be reduced. In addition, if the frequency for the second RFID tag is ten times or more the frequency for the first RFID tag, the capacitor electrode portion has a very low impedance at the frequency for the second RFID tag so that the entire radiation electrode functions as a single radiation electrode expanding in a planar shape at the frequency for the second RFID tag. This further improves the radiation characteristics as the second RFID tag.

The capacitor electrodes may include a one-side electrode and an other-side electrode disposed opposite each other with a dielectric layer therebetween in a thickness direction, the line electrode includes a spiral portion extending spirally around the capacitor electrodes, the one-side electrode is electrically connected to an inner end of the spiral portion of the line electrode, and a crossing line electrode is provided so as to connect an outer end of the spiral portion of the line electrode and the other-side electrode.

This configuration allows the crossing line electrode portion to have a low impedance at the frequency for the second RFID tag so that the electrodes can be assumed to be equivalently connected together with the crossing line electrode portion despite the spiral shape of the line electrode portion, thus functioning as a radiation electrode with high radiation efficiency.

The line electrode may have an electrode-removed region, the first radio IC is mounted so as to be connected between ends of the line electrode in the electrode-removed region, and the second radio IC is mounted so as to be connected to the crossing line electrode near the outer end of the line electrode.

This configuration allows the crossing electrode portion and the capacitor electrode portion to have a very low impedance at the RFID frequency, thus enhancing the effect of the entire radiation electrode as a radiation electrode and improving the radiation characteristics of the RFID tag antenna.

A pair of magnetic-field radiation electrode portions may be provided, and the first and second radio ICs are electrically connected or electromagnetically coupled to the pair of radiation electrodes.

This configuration allows the pair of radiation electrodes to function as two first RFID tag radiation antennas for different frequencies, for example, as an RFID tag for different frequencies in the HF band. In addition, if the radio IC for the second RFID tag is mounted with the pair of radiation electrodes connected as a dipole antenna, they function as a relatively large radiation electrode for the RFID tag, thus achieving superior radiation characteristics.

The radiation electrode portions may include an electric-field radiation electrode portion paired with a magnetic-field radiation electrode portion to constitute an equivalent dipole antenna together with the magnetic-field radiation electrode portion, and the second radio IC is electrically connected or magnetically coupled to the magnetic-field radiation electrode portion and the electric-field radiation electrode portion.

This configuration provides superior radiation characteristics.

The capacitor electrodes may be disposed inside the spiral portion of the line electrode, and the electric-field radiation electrode portion is disposed outside the spiral portion of the line electrode.

This configuration prevents the radiation electrode from being shielded by the spiral line electrode portion, thus maintaining superior radiation characteristics.

The first or second radio IC may be a radio IC chip electrically connected to the radiation electrode.

This configuration allows a reduction in overall size and thickness because an extremely small radio IC portion can be configured.

The first or second radio IC may be an electromagnetic coupling module including a feed circuit board having a matching circuit including at least one inductor and a radio IC chip mounted on a top surface of the feed circuit board and electrically connected to the matching circuit.

This configuration eliminates a characteristic variation due to a deviation in the mounting position of the radio IC and also improves matching with the radiation electrode, thereby increasing antenna efficiency.

A battery or capacitor for accumulating the power output from the first radio IC may be further provided.

This eliminates the need to simultaneously receive an RF signal in the first frequency band and transmit and receive an RF signal in the second frequency band. That is, power reception and communication can be performed at different timings. Accordingly, a reader/writer that uses the first frequency band and a reader/writer that uses the second frequency band can be independently provided.

The radio IC device may include, for example, a sensor, and the first radio IC or the second radio IC has means for transmitting detection results from the sensor.

This configuration allows transmission and reception of sensor information.

### Advantages

This invention allows power reception and communication using RF signals in a plurality of frequency bands for RFID tags, thus enabling efficient communication. In addition, the overall size can be reduced because the radiation electrode functions as radiation electrodes for the first and second RFID frequencies and accordingly the RFID tag antenna for the first frequency and the RFID tag antenna for the second frequency need not be separately provided. Furthermore, the radiation electrode functions as a magnetic-field antenna for the first RFID tag and as an electric-field antenna for the second RFID tag to avoid a deterioration in radiation characteristics due to interference between antennas so that a radio IC device with superior radiation characteristics can be configured. Brief Description of Drawings

[Fig. 1] Fig. 1 is a diagram showing the configuration of an RFID tag shown in Patent Document 1.
[Fig. 2] Fig. 2 is a plan view and a sectional view of a radio IC device according to a first embodiment.
[Fig. 3] Fig. 3 is diagrams illustrating the effects and advantages of the radio IC device as an RFID tag.
[Fig. 4] Fig. 4 is plan views of a radio IC device according to a second embodiment.
[Fig. 5] Fig. 5 is a plan view of a radio IC device according to a third embodiment.
[Fig. 6] Fig. 6 is a sectional view of a first RFID tag electromagnetic coupling module used in the radio IC device according to the third embodiment.
[Fig. 7] Fig. 7 is a sectional view of a second RFID tag electromagnetic coupling module used in the radio IC device according to the third embodiment.
[Fig. 8] Fig. 8 is a plan view of a radio IC device according to a fourth embodiment.
[Fig. 9] Fig. 9 is a plan view of a radio IC device according to a fifth embodiment.
[Fig. 10] Fig. 10 is a partial plan view of a radio IC device according to a sixth embodiment.
[Fig. 11] Fig. 11 is a plan view of a radio IC device according to a seventh embodiment.
[Fig. 12] Fig. 12 is a plan view of a radio IC device according to an eighth embodiment.
[Fig. 13] Fig. 13 is plan views of a radio IC device according to a ninth embodiment.
[Fig. 14] Fig. 14 is a plan view of a radio IC device according to a tenth embodiment.
[Fig. 15] Fig. 15(A) is a plan view of a radio IC device 111 according to an eleventh embodiment; Fig. 15(B) is a plan view showing the state in which an electrode pattern is formed on a substrate 21 serving as a component of the radio IC device 111; and Fig. 15(C) is a diagram showing the internal configuration of a radio IC chip 62.
[Fig. 16] Fig. 16(A) is a plan view of a radio IC device 112 according to a twelfth embodiment; and Fig. 16(B) is a diagram showing the internal configuration of a radio IC chip 63.
[Fig. 17] Fig. 17 is a plan view of a radio IC device 113 according to a thirteenth embodiment.
[Fig. 18] Fig. 18 is a plan view of a radio IC device 114 according to a fourteenth embodiment.
[Fig. 19] Fig. 19 is a plan view of a radio IC device 115 according to a fifteenth embodiment.

### First Embodiment

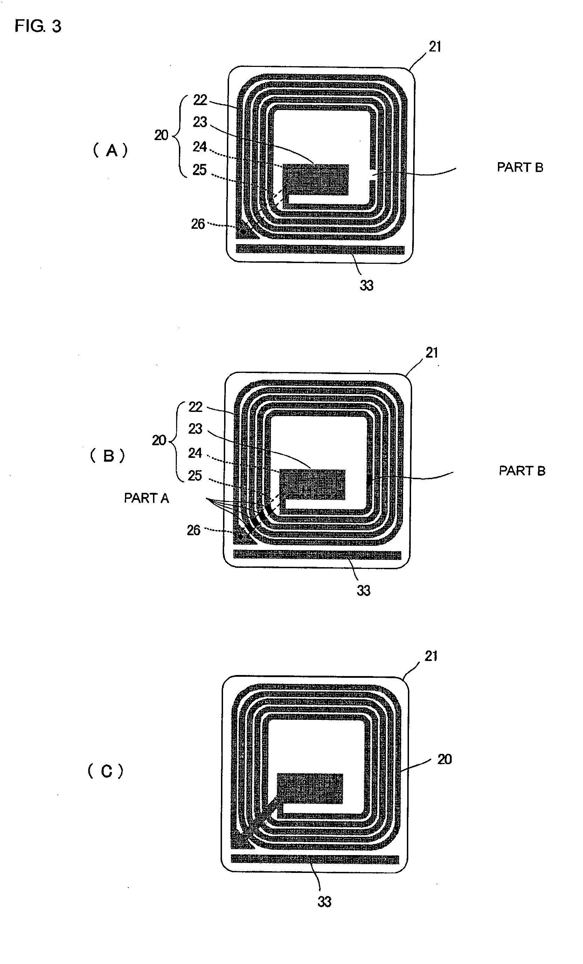

Fig. 2 is diagrams showing the configuration of a radio IC device according to a first embodiment. Fig. 2(A) is a plan view thereof, and Fig. 2(B) is a sectional view of part a-b in Fig. 2(A). In addition, Fig. 3 is diagrams showing an electrode pattern on a substrate 21 and the operation thereof. This radio IC device 101 has various predetermined electrodes formed on the substrate 21 and RFID tag radio ICs 31 and 51, formed of IC chips, mounted on the substrate 21.

In Fig. 2, the radio IC device 101 has a desired electrode pattern of conductor, such as copper or aluminum, formed on the substrate 21, which is formed of a resin film such as PET or PP. Specifically, a resin sheet having copper or aluminum foil laminated thereon is used, and the copper or aluminum foil is patterned by etching.

As shown in Fig. 2, a spiral line electrode portion 22 and a one-side electrode 23 connected to an inner end thereof are formed on a top surface of the substrate 21. An other-side electrode 24 is formed on a bottom surface (backside) of the substrate 21 at a position opposite the one-side electrode 23, and a crossing line electrode 25 is formed so as to provide a bridge connection between the other-side electrode 24 and a position opposite an outer end of the line electrode portion 22 (the position of a front-to-back connection portion 26) across the turns of the line electrode portion 22.

An end of the crossing line electrode 25 and the outer end of the line electrode portion 22 are electrically connected with the front-to-back connection portion 26.

The first RFID tag radio IC 51 is mounted so as to be inserted somewhere in the line electrode portion 22.

In addition, a linear electric-field radiation electrode portion 33 is formed on the top surface of the substrate 21. The second RFID tag radio IC 31 is mounted with terminal electrodes thereof connected to the electric-field radiation electrode portion 33 near an end thereof and to the front-to-back connection portion 26.

The radio IC device 101 shown in Fig. 2 functions as an RFID tag for a first frequency band (for example, the 13.56 MHz HF band) and as an RFID tag for a second frequency band (for example, the 900 MHz UHF band). The function as an RFID tag for the HF band is as follows.

The line electrode portion 22 functions as a loop (spiral) magnetic-field radiation electrode and as an inductor in the spiral portion from the outer end to the inner end, whereas the one-side electrode 23 and the other-side electrode 24, disposed opposite each other with the substrate 21 therebetween, function as a capacitor. The line electrode portion 22, the electrodes 23 and 24 of the capacitor electrode portion, and the crossing line electrode 25 constitute a magnetic-field radiation electrode portion 20. The inductor L and the capacitor C of the magnetic-field radiation electrode portion 20 constitute an LC resonant circuit. The resonant frequency is set to be higher than the frequency for the first RFID tag. Accordingly, the magnetic-field radiation electrode portion 20 is used below the resonant frequency, that is, operates inductively (magnetically), so that it functions as a magnetic-field radiation electrode at the frequency for the first RFID tag.

Fig. 3(A) shows the state before the mounting of the first RFID tag radio IC 51 and the second RFID tag radio IC 31. In Fig. 3(A), part B is a region where the first RFID tag radio IC 51 is to be mounted; the first RFID tag radio IC 51 is mounted in the electrode-removed region of the line electrode portion 22.

The first RFID tag radio IC 51 operates using a voltage occurring across the ends of the electrode-removed region of the line electrode portion 22 as a power supply and, at the same time, responds to an inquiry from a reader/writer by changing (modulating) the impedance connected between the ends of the electrode-removed region of the line electrode portion 22.

The second RFID tag radio IC 31 and the electric-field radiation electrode portion 33 do not affect the first RFID tag because they are present outside the closed circuit of the LC resonant circuit.

Next, the function as the second RFID tag will be described with reference to Fig. 3.

Fig. 3(A) shows the state before the mounting of the second RFID tag radio IC 31 and the first RFID tag radio IC 51. Some capacitance occurs between the crossing line electrode 25 and the line electrode portion 22 crossing it with the substrate 21 therebetween (parts A), although the impedance due to that capacitance is extremely low in the second frequency band. Similarly, the impedance due to the capacitance between the one-side electrode 23 and the other-side electrode 24 is extremely low in the RFID frequency band. In addition, the impedance of part B can be suppressed by reducing the distance between the ends thereof to several hundreds of micrometers. As shown in Fig. 3(B), therefore, the line electrode portion 22, the electrodes 23 and 24 of the capacitor electrode portion, and the crossing line electrode 25 function as a single continuous radiation electrode (electric-field radiation electrode) 20 in the frequency band of the RFID tag (for example, 900 MHz in the UHF band).

The resonant frequency of the single continuous radiation electrode 20 is lower than the second frequency band. Accordingly, the single continuous radiation electrode 20 functions as an electric-field radiation electrode in the second frequency band. The single continuous radiation electrode 20 and the electric-field radiation electrode portion 33 function as a dipole antenna.

The electric-field radiation electrode portion 33 has a length nearly equal to one-quarter wavelength in the second frequency band. Similarly, the single continuous radiation electrode 20 has a line length equivalent to one-quarter wavelength in the second frequency band. However, the length or size of the electric-field radiation electrode portion 33 and the single continuous radiation electrode 20 is not limited to one-quarter wavelength, but may be any size that allows them to function as a radiation electrode, particularly, a radiation electrode for a dipole antenna, in the second frequency band.

Comparing the first frequency band and the second frequency band, it is desirable to meet the relationship that the second frequency band is ten times or more the first frequency band. With such frequency relationship, when the radio IC device 101 operates as the second RFID tag, the capacitances of parts A and B in Fig. 3(B) are on the order of several picofarads and result in low impedances on the order of several tens of ohms in the UHF band, thus providing the function as a single electrode shown in Fig. 3(C) with directivity close to that of a dipole antenna.

With the configuration shown above, the radiation electrodes for the first and second RFID tags can be integrated. In addition, the area can be reduced because no distance is required between the radiation electrodes for the first and second RFID tags. Furthermore, a gain drop can be eliminated because there is no component equivalent to, for example, an HF-band RFID tag that would otherwise act as a shield blocking radiation from, for example, a UHF-band RFID tag.

The structure of the one-side electrode 23 of the capacitor electrode portion and the other-side electrode 24 of the capacitor electrode portion is not limited to the structure in which they are disposed opposite each other with the substrate 21 therebetween; instead, the one-side electrode and the other-side electrode may be disposed on one surface of the substrate with a dielectric layer formed therebetween.

### Second Embodiment

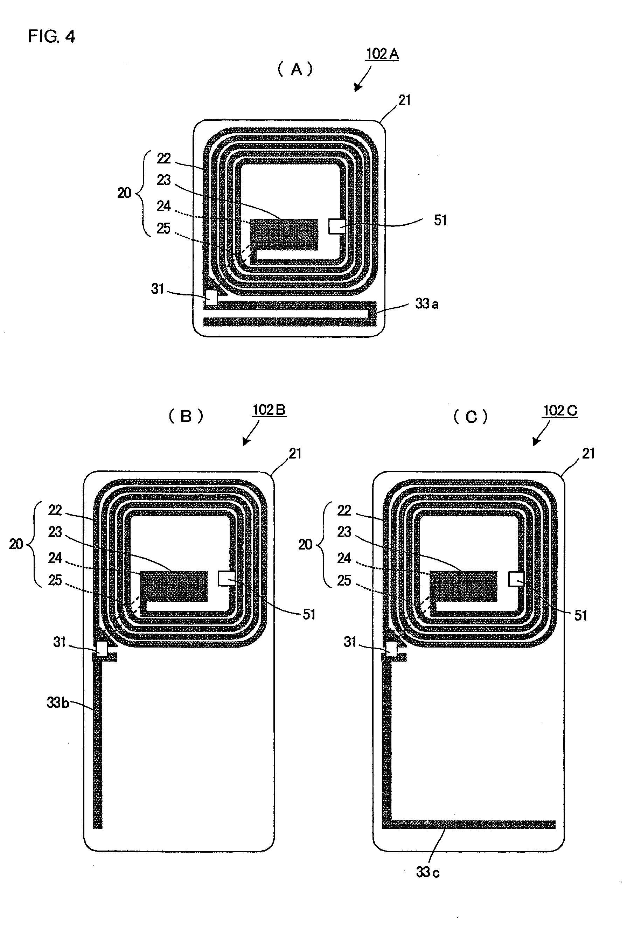

Fig. 4 is plan views of a radio IC device according to a second embodiment. In the example shown in Fig. 2, the linear electric-field radiation electrode portion 33 is formed along one side of the spiral line electrode portion 22 and one side of the substrate 21; the examples shown in Fig. 4 differ in the shape of the electric-field radiation electrode portion 33. For a radio IC device 102A in Fig. 4(A), an electric-field radiation electrode portion 33a is formed in a folded shape so as to reciprocate along one side of the line electrode portion 22 and one side of the substrate 21.

For a radio IC device 102B in Fig. 4(B), an electric-field radiation electrode portion 33b is formed in a linear shape so as to extend along one side of the substrate 21 in a direction away from the magnetic-field radiation electrode portion 20.

For a radio IC device 102C in Fig. 4(C), an electric-field radiation electrode portion 33c is formed in an L-shape so as to extend along two sides of the substrate 21.

In Fig. 4, the structure and operation other than above are similar to those of the first embodiment.

The structure shown in Fig. 4(A) allows the equivalent line length (electrical length) of the electric-field radiation electrode portion 33a to be extended without substantially increasing the area of the substrate 21 and therefore allows the area of the substrate 21 required to achieve the necessary frequency for the RFID tag to be reduced correspondingly.

The structure in Fig. 4(B) increases radiation efficiency as a dipole antenna because the magnetic-field radiation electrode portion 20 and the electric-field radiation electrode portion 33b extend in directions away from each other. Accordingly, the sensitivity of the RFID tag can be enhanced.

The structure in Fig. 4(C) increases sensitivity as an RFID tag while allowing a reduction in overall size because the area of the substrate 21 can be effectively utilized to form the electric-field radiation electrode portion 33c having the necessary line length (electrical length).

### Third Embodiment

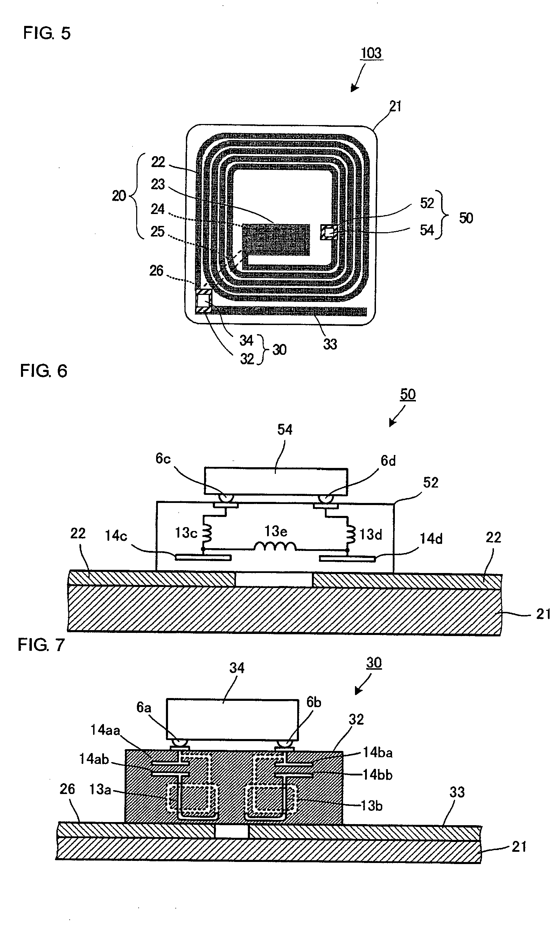

Fig. 5 is a plan view of a radio IC device according to a third embodiment. Fig. 6 is a sectional view of a first RFID tag electromagnetic coupling module 50 used in the radio IC device 103. Fig. 7 is a sectional view of a second RFID tag electromagnetic coupling module 30 used in the radio IC device 103.

The first RFID tag electromagnetic coupling module 50 is composed of a feed circuit board 52 and a radio IC chip 54 mounted on top thereof. The second RFID tag electromagnetic coupling module 30 is composed of a feed circuit board 32 and a radio IC chip 34 mounted on top thereof. While the two connection terminals formed on the radio IC 51 are directly connected to the electrode-removed region of the magnetic-field radiation electrode portion 20 in the first and second embodiments, the first RFID tag electromagnetic coupling module 50 is electromagnetically coupled to the magnetic-field radiation electrode portion 20 in the example shown in Fig. 5. In addition, while the two connection terminals formed on the radio IC 31 are directly connected to the magnetic-field radiation electrode portion 20 and the electric-field radiation electrode portion 33 in the first and second embodiments, the second RFID tag electromagnetic coupling module 30 is electromagnetically coupled to the magnetic-field radiation electrode portion 20 and the electric-field radiation electrode portion 33 in the example shown in Fig. 5.

As shown in Fig. 6, capacitor electrodes 14c and 14d and inductor conductors 13c, 13d, and 13e are formed inside the feed circuit board 52. Electrode pads are formed on a top surface of the feed circuit board 52 so that the inductor conductors 13c and 13d are connected thereto, and solder bumps 6c and 6d on the radio IC chip 54 are bonded to the electrode pads.

The radio IC chip 54 has a circuit for supplying power to the solder bumps 6c and 6d. The inductor conductors 13c, 13d, and 13e constitute a matching circuit, and the capacitor electrodes 14c and 14d are capacitively coupled to the ends of the line electrode portion 22. In this way, the radio IC chip 54 and the loop antenna are impedance-matched and are capacitively coupled with a capacitance on the order of several picofarads. This eliminates a characteristic variation due to a deviation in the mounting position of the radio IC and also improves matching with the radiation electrode for increased antenna efficiency. In addition, because the matching circuit performs matching at the frequency used for the first RFID tag, the frequency band can be widened without being affected by the resonant frequency of the magnetic-field radiation electrode portion 20 alone.

As shown in Fig. 7, capacitor electrodes 14aa, 14ab, 14ba, and 14bb and inductor conductors 13a and 13b are formed inside the feed circuit board 32. Electrode pads are formed on a top surface of the feed circuit board 32 so that the capacitor electrodes 14aa and 14ba are connected thereto, and solder bumps 6a and 6b on the radio IC chip 34 are bonded to the electrode pads.

The radio IC chip 34 has a circuit for supplying power to the solder bump 6a and a circuit for supplying power to the solder bump 6b. Thus, a matching circuit is constituted by an LC circuit composed of a capacitor between the capacitor electrodes 14aa and 14ab and an inductor formed by the inductor conductor 13a. The inductor conductors 13a and 13b are magnetically coupled to the front-to-back connection portion 26 and the electric-field radiation electrode portion 33, respectively. In this way, the radio IC chip 34 and the dipole antenna are impedance-matched and are electromagnetically coupled. This eliminates a characteristic variation due to a deviation in the mounting position of the radio IC and also improves matching with the radiation electrode for increased antenna efficiency. In addition, because the matching circuit performs matching at the frequency used for the second RFID tag, the frequency band can be widened without being affected by the resonant frequency of the antenna formed by the magnetic-field radiation electrode portion 20 and the electric-field radiation electrode portion 33.

When the radio IC device 103 operates as the first RFID tag (HF-band RFID tag), a capacitance of several picofarads between the second RFID tag electromagnetic coupling module 30 and the front-to-back connection portion 26 results in a high impedance, namely, about 10 kΩ. Hence, the second RFID tag electromagnetic coupling module 30 and the electric-field radiation electrode portion 33 do not substantially affect the resonant frequency of the first RFID tag (HF-band RFID tag).

On the other hand, the second RFID tag electromagnetic coupling module 30 is designed so that, when the radio IC device 103 operates as the second RFID tag (UHF-band RFID tag), capacitances of several picofarads between the second RFID tag electromagnetic coupling module 30 and the front-to-back connection portion 26, and between the second RFID tag electromagnetic coupling module 30 and the electric-field radiation electrode portion 33, respectively, and the matching circuits inside the second RFID tag electromagnetic coupling module 30 allow impedance matching between the radio IC chip 34 and the magnetic-field radiation electrode portion 20 and the electric-field radiation electrode portion 33.

The frequency of signals transmitted and received by the magnetic-field radiation electrode portion 20 and the electric-field radiation electrode portion 33 can be substantially determined by the LC circuits of the feed circuit board 32.

Thus, the use of the electromagnetic coupling modules 30 and 50 eliminates the need to set the length, electrode distance, etc. of the radiation electrode depending on frequency and therefore allows the radiation electrode to be formed in various shapes, thus improving design flexibility in terms of radiation characteristics. In addition, because the feed circuit boards need only to be mounted at positions where they can be electromagnetically coupled to the radiation electrode, the mounting accuracy can be alleviated.

### Fourth Embodiment

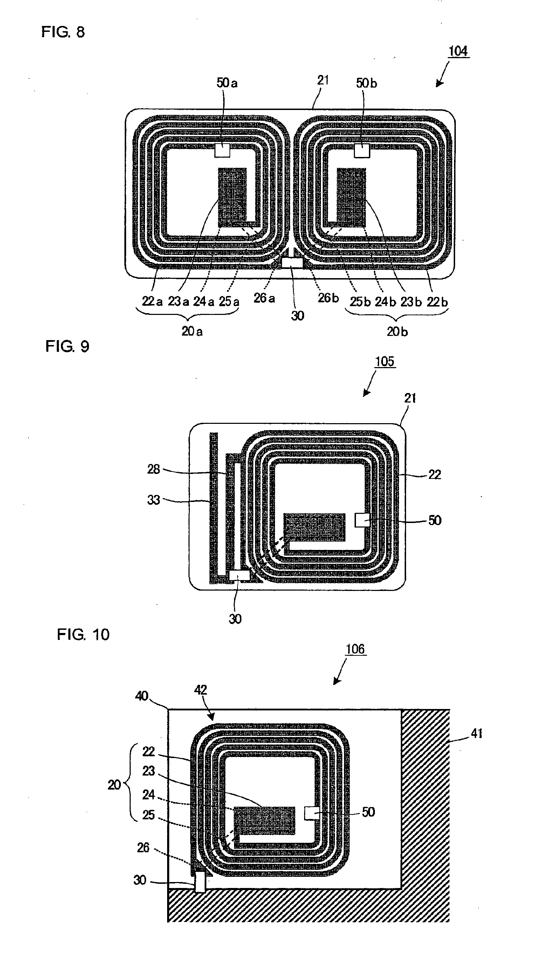

Fig. 8 is a plan view of a radio IC device according to a fourth embodiment. The radio IC device 104 according to the fourth embodiment includes two magnetic-field radiation electrode portions 20a and 20b.

Two spiral line electrode portions 22a and 22b and one-side electrodes 23a and 23b connected to inner ends thereof are formed on the top surface of the substrate 21. In addition, other-side electrodes 24a and 24b are formed on the bottom surface of the substrate 21 at positions opposite the one-side electrodes 23a and 23b, respectively, and crossing line electrodes 25a and 25b are formed so as to provide bridge connections between the other-side electrodes 24a and 24b and front-to-back connection portions 26a and 26b across the line electrode portions. Ends of the crossing line electrodes 25a and 25b and outer ends of the line electrode portions 22a and 22b are electrically connected with the front-to-back connection portions 26a and 26b.

First RFID tag electromagnetic coupling modules or radio IC chips 50a and 50b are mounted somewhere in the line electrode portions 22a and 22b, respectively.

The magnetic-field radiation electrode portion 20a, constituted by the line electrode portion 22a, the electrodes 23a and 24a, and the crossing line electrode 25a, functions as a resonant circuit for one first RFID tag, whereas the magnetic-field radiation electrode portion 20b, constituted by the line electrode portion 22b, the electrodes 23b and 24b, and the crossing line electrode 25b, functions as a resonant circuit for another first RFID tag.

In addition, a second RFID tag electromagnetic coupling module 30 is mounted with connection terminals thereof connected to the front-to-back connection portions 26a and 26b.

As in the embodiments described above, the two magnetic-field radiation electrode portions 20a and 20b function as electric-field radiation electrodes in the second frequency band, and the length or size thereof is nearly equivalent to one-quarter wavelength in the second frequency band. After all, this is equivalent to a structure in which a dipole antenna is connected to the second RFID tag electromagnetic coupling module 30.

This structure allows the radio IC device 104 to be used as an RFID tag for two HF bands with different frequencies.

In addition, this structure further improves the radiation characteristics as the second RFID tag because the two magnetic-field radiation electrode portions 20a and 20b have a good symmetry.

### Fifth Embodiment

Fig. 9 is a plan view of a radio IC device 105 according to a fifth embodiment. In this example, a line-electrode extending portion 28 extends from somewhere along the line electrode portion 22 so that the impedance of the region where the electromagnetic coupling module 30 is mounted is inductive (L). That is, the impedance is not capacitive but inductive because part of the line electrode portion 22 and the line-electrode extending portion 28 form a loop as viewed from the region where the electromagnetic coupling module 30 is mounted.

This facilitates impedance matching with the capacitive electromagnetic coupling module 30.

### Sixth Embodiment

Fig. 10 is a partial plan view of a radio IC device according to a sixth embodiment. While the radio IC device according to any of the first to fifth embodiments is configured on a sheet-like substrate and is used by, for example, bonding it to an article, the radio IC device 106 according to the sixth embodiment is configured on a mounting substrate of, for example, a terminal device (cellular phone) for a mobile communication system.

In Fig. 10, a nonground region 42 where a ground electrode 41 is not formed is provided at an end of a mounting substrate 40, and a spiral line electrode portion 22 and a one-side electrode 23 extending from an inner end thereof are formed on a top surface of the nonground region 42. An other-side electrode 24 is formed on a bottom surface (backside) of the nonground region 42 at a position opposite the one-side electrode 23, and a crossing line electrode 25 is formed so as to provide a bridge connection between the other-side electrode 24 and a position opposite an outer end of the line electrode portion 22 (the position of a front-to-back connection portion 26) across the turns of the line electrode portion 22. An end of the crossing line electrode 25 and the outer end of the line electrode portion 22 are electrically connected with the front-to-back connection portion 26.

A first RFID tag electromagnetic module 50 is mounted so as to be inserted somewhere in the line electrode portion 22. The line electrode portion 22 and the electrodes 23 and 24 function as a radiation electrode for a first RFID tag.

An electromagnetic coupling module 30 is mounted so as to be connected to the front-to-back connection portion 26 and the ground electrode 41. A magnetic-field radiation electrode portion 20 constituted by the line electrode portion 22, the electrodes 23 and 24, and the crossing line electrode 25 and the ground electrode 41 function as a radiation electrode for a second RFID tag. That is, one terminal electrode of the second RFID tag electromagnetic coupling module 30 is connected to the magnetic-field radiation electrode portion 20, whereas the other terminal electrode is connected to the ground electrode 41, so that they function as a monopole antenna as a whole.

This structure can be configured on, for example, a mounting substrate of a cellular phone, and also eliminates the need to form another radiation electrode for constituting a dipole antenna, thus allowing a reduction in overall occupied area.

The radio IC device shown as the fourth or fifth embodiment may be provided on the top surface of the nonground region 42 of the mounting substrate.

### Seventh Embodiment

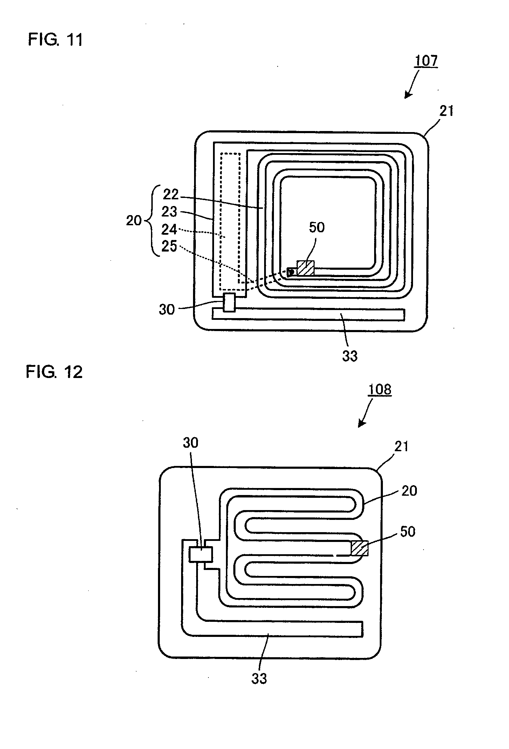

Fig. 11 is a plan view of a radio IC device according to a seventh embodiment. While the capacitor electrode portion is disposed inside the spiral line electrode portion in any of the first to sixth embodiments, the capacitor electrode portion is disposed outside the spiral line electrode portion in the example shown in Fig. 10. Specifically, a spiral line electrode portion 22 and a one-side electrode 23 extending from an outer end thereof are formed on the top surface of the substrate 21. An other-side electrode 24 is formed on the bottom surface of the substrate 21 at a position opposite the one-side electrode 23, and a crossing line electrode 25 is formed so as to extend from the other-side electrode 24 to a position opposite an inner end of the line electrode portion 22. An end of the crossing line electrode 25 and the inner end of the line electrode portion 22 are electrically connected from front to back. With this configuration, a magnetic-field radiation electrode portion 20 constituted by the line electrode portion 22, the electrodes 23 and 24, and the crossing line electrode 25 functions as a resonant circuit for a first RFID tag.

In addition, an electric-field radiation electrode portion 33 is formed on the top surface of the substrate 21, and a second RFID tag electromagnetic coupling module 30 is mounted with terminal electrodes thereof connected to an end of the electric-field radiation electrode portion 33 and the one-side electrode 23.

With this structure, the magnetic-field radiation electrode portion 20 can be assumed as a single continuous electrode in the frequency band of the RFID tag, thus functioning as a radiation electrode, because both a capacitance occurring between the opposing positions of the line electrode portion 22 and the crossing line electrode 25 and a capacitance occurring between the opposing positions of the electrodes 23 and 24 result in very low impedances in the frequency band of the RFID tag. In this case, again, the effect as a uniform metal-plate-like radiation electrode is improved because the radio IC is mounted near the crossing line electrode 25 and the electrodes 23 and 24.

### Eighth Embodiment

Fig. 12 is a plan view of a radio IC device according to an eighth embodiment. A magnetic-field radiation electrode portion 20 is formed on the top surface of the substrate 21 in a loop shape as a whole and in a meandering shape locally. In addition, an L-shaped electric-field radiation electrode portion 33 is formed on the top surface of the substrate 21.

A first RFID tag electromagnetic coupling module 50 is mounted somewhere in the magnetic-field radiation electrode portion 20. In addition, a second RFID tag electromagnetic coupling module 30 is mounted between an end of the electric-field radiation electrode portion 33 and part of the magnetic-field radiation electrode portion 20. The magnetic-field radiation electrode portion 20 functions as a loop antenna for a first RFID tag. In the second frequency band, the magnetic-field radiation electrode portion 20 is equivalent to a uniform metal-plate-like radiation electrode so that the magnetic-field radiation electrode portion 20 and the electric-field radiation electrode portion 33 function as a dipole antenna for a second RFID tag.

Because the magnetic-field radiation electrode portion 20 is configured not to be spiral but to form a closed loop in the same plane, the magnetic-field radiation electrode portion 20 can be formed only on one side of the substrate 21.

### Ninth Embodiment

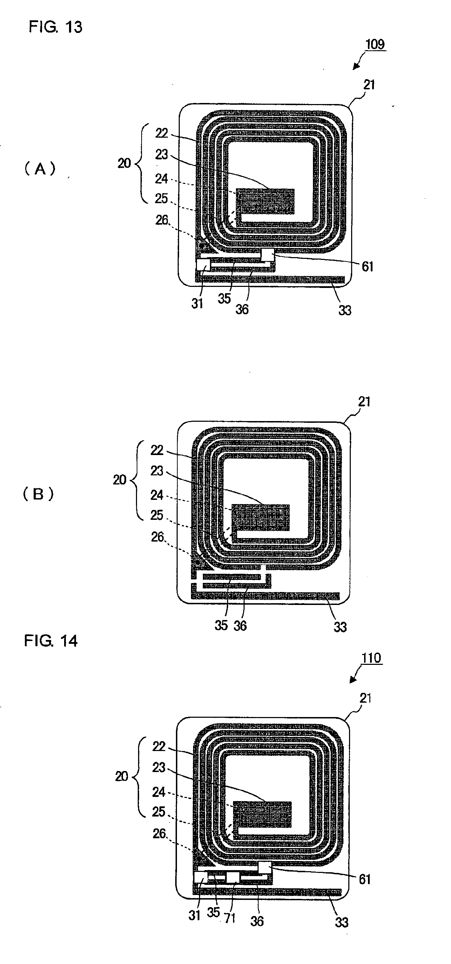

Fig. 13(A) is a plan view of a radio IC device 109 according to a ninth embodiment. Fig. 13(B) is a plan view showing the state in which an electrode pattern is formed on a substrate 21 serving as a component of the radio IC device 109. In the radio IC device 109, an RFID tag radio IC 31 and a first radio IC chip 61, formed of IC chips, are mounted on the substrate 21.

As shown in Fig. 13, a spiral line electrode portion 22 and a one-side electrode 23 connected to an inner end thereof are formed on a top surface of the substrate 21. An other-side electrode 24 is formed on a bottom surface (backside) of the substrate 21 at a position opposite the one-side electrode 23, and a crossing line electrode 25 is formed so as to provide a bridge connection between the other-side electrode 24 and a position opposite an outer end of the line electrode portion 22 (the position of a front-to-back connection portion 26) across the turns of the line electrode portion 22.

An end of the crossing line electrode 25 and the outer end of the line electrode portion 22 are electrically connected with the front-to-back connection portion 26.

The first radio IC chip 61 is mounted so as to be inserted somewhere in the line electrode portion 22.

In addition, a linear electric-field radiation electrode portion 33 is formed on the top surface of the substrate 21. The second RFID tag radio IC 31 is mounted with terminal electrodes thereof connected to the electric-field radiation electrode portion 33 near an end thereof and to the front-to-back connection portion 26.

The radio IC device 109 shown in Fig. 13 functions to receive an RF signal in a first frequency band (for example, the 13.56 MHz HF band) as power and functions as an RFID tag for transmitting and receiving an RF signal in a second frequency band (for example, the 300 MHz or 900 MHz UHF band).

The line electrode portion 22 functions as a loop (spiral) magnetic-field radiation electrode and as an inductor in the spiral portion from the outer end to the inner end, whereas the one-side electrode 23 and the other-side electrode 24, disposed opposite each other with the substrate 21 therebetween, function as a capacitor. The line electrode portion 22, the electrodes 23 and 24 of the capacitor electrode portion, and the crossing line electrode 25 constitute a magnetic-field radiation electrode portion 20. The inductor L and the capacitor C of the magnetic-field radiation electrode portion 20 constitute an LC resonant circuit. This magnetic-field radiation electrode portion 20 functions as an antenna for receiving (receiving as power) an RF signal in the first frequency band.

The first radio IC chip 61 rectifies a voltage occurring across the ends of an electrode-removed region of the line electrode portion 22 and supplies the power to the RFID tag radio IC 31 via power supply lines 35 and 36. The first radio IC chip 61 may be a simple rectifier.

The RFID tag radio IC 31 is a radio IC for allowing the radio IC device 109 to function as RFID. The RFID tag radio IC 31 operates using the voltage applied between the power supply lines 35 and 36 as a power supply. Thus, the radio IC device 109 can function as RFID using the first frequency band by receiving power from the first radio IC chip 61. The radio IC device 109 can also function as an RFID tag using both the first frequency band and the second frequency band by receiving power from the first radio IC chip 61 and by the second RFID tag radio IC 31 itself receiving power from an electromagnetic field. The RFID tag radio IC 31 transmits and receives an RF signal in the second frequency band using the magnetic-field radiation electrode portion 20 and the electric-field radiation electrode portion 33 as a dipole antenna.

The mechanism by which the magnetic-field radiation electrode portion 20 and the electric-field radiation electrode portion 33 function as a dipole antenna in the second frequency band is as described in the first embodiment.

While the first radio IC chip 61 is directly connected to the line electrode portion 22 in the above example, an electromagnetic coupling module such as the electromagnetic coupling module 50 shown in Fig. 5 may instead be configured and provided. Similarly, the second RFID tag radio IC 31 may be an electromagnetic coupling module. However, the supply voltage is supplied as a direct current.

In this way, large power can be received in the lower first frequency band so that the radio IC device 109 can efficiently function as an RFID tag.

### Tenth Embodiment

Fig. 14 is a plan view of a radio IC device 110 according to a tenth embodiment. Unlike the radio IC device 109 shown in Fig. 13(A) in the ninth embodiment, a capacitor 71 is connected in parallel between the power supply lines 35 and 36. Thus, the capacitor 71 smoothes and accumulates the power rectified by the first radio IC chip 61. Even if the power induced by the magnetic-field radiation electrode portion 20 decreases and accordingly the power output from the first radio IC chip 61 decreases, a stable supply voltage is supplied to the RFID tag radio IC 31 by the accumulation effect of the capacitor 71. The capacitance of the capacitor 71 is determined depending on the necessary operating time of the RFID tag radio IC 31 with the magnetic-field radiation electrode portion 20 receiving no RF signal in the first frequency band.

The capacitor 71 may be replaced with a rechargeable battery.

The radio IC device 110 according to the tenth embodiment can perform transmission/reception in the second frequency band using the power accumulated in the first frequency band so that it can perform transmission/reception in the second frequency band without necessarily simultaneously receiving an RF signal in the first frequency band (HF band) and transmitting and receiving an RF signal in the second frequency band (UHF band). Accordingly, a reader/writer that uses the first frequency band and a reader/writer that uses the second frequency band can be independently provided. In addition, because RF signals in the first and second frequency bands are transmitted at different timings, the transmission timings for the first and second frequency bands need not match each other, thus simplifying the control.

### Eleventh Embodiment

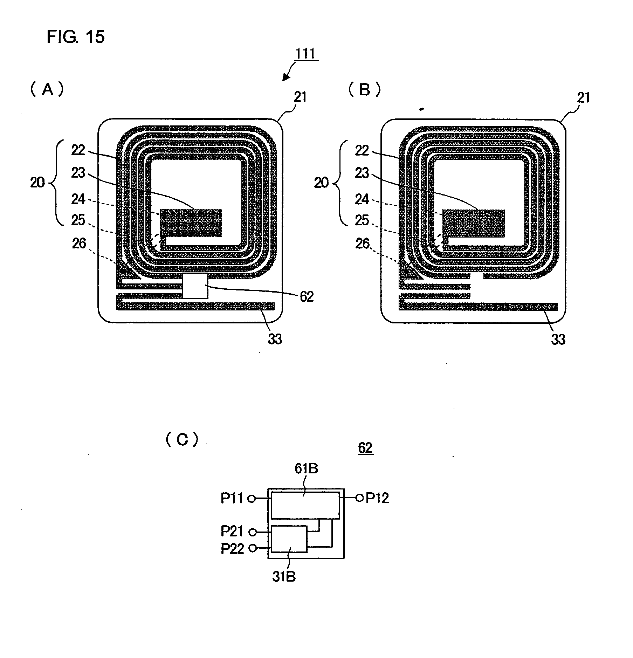

Fig. 15(A) is a plan view of a radio IC device 111 according to an eleventh embodiment not forming part of the claimed invention. Fig. 15(B) is a plan view showing the state in which an electrode pattern is formed on a substrate 21 serving as a component of the radio IC device 111.

While the RFID tag radio IC 31 and the first radio IC chip 61 are separately mounted on the substrate 21 in the example shown in Fig. 13, a single radio IC chip 62 is mounted in the example shown in Fig. 15. This radio IC chip 62 is a one-chip radio IC chip having the function of the RFID tag radio IC 31 and the function of the first radio IC chip 61.

Fig. 15(C) is a diagram showing the internal configuration of the radio IC chip 62. The radio IC chip 62 includes a functional section 31B equivalent to the RFID tag radio IC 31 and a functional section 61B equivalent to the first radio IC chip 61. Ports P11 and P12 are connected so as to be inserted somewhere in the line electrode portion 22. A port P21 is connected to a line leading to the front-to-back connection portion 26, whereas a port P22 is connected to a line leading to the electric-field radiation electrode portion 33.

The two functional sections may be configured on a single semiconductor chip or may be configured on different chips and accommodated in a single package.

### Twelfth Embodiment

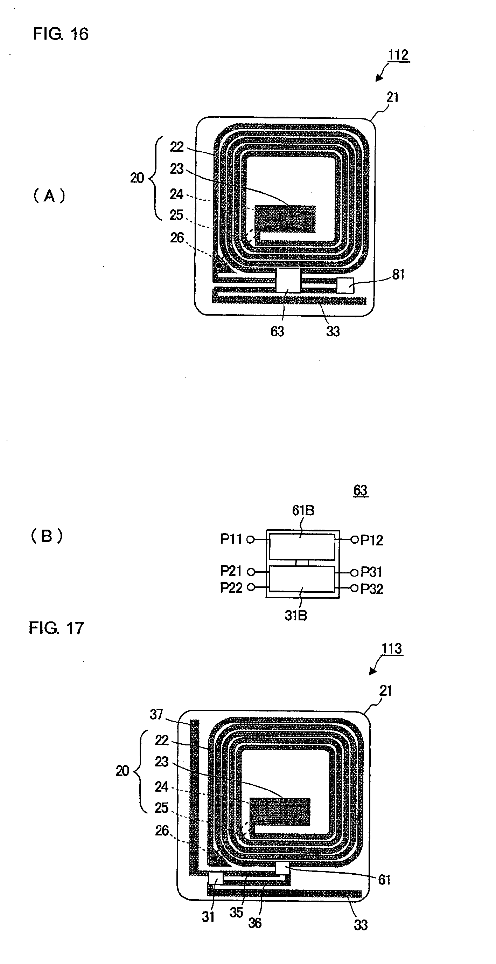

Fig. 16(A) is a plan view of a radio IC device 112 according to a twelfth embodiment. This radio IC device 112 includes a radio IC chip 63 and a sensor chip 81. The sensor chip is, for example, a thermistor for detecting temperature, and the radio IC chip 63 measures temperature using the sensor chip 81 and transmits temperature information together with unique information on the RFID tag.

Fig. 16(B) is a diagram showing the internal configuration of the radio IC chip 63. An RFID tag radio IC functional section 31B measures temperature by directly or indirectly detecting the resistance of the sensor chip 81, which is connected to ports P31 and P32. The RFID tag radio IC functional section 31B then transmits information on the RFID tag and information on the measured temperature by an RF signal in the second frequency band.

Alternatively, the first radio IC functional section 61B may measure temperature by directly or indirectly detecting the resistance of the sensor chip 81. In addition, the first radio IC functional section 61B may transmit the information on the RFID tag and the information on the measured temperature by an RF signal in the first frequency band.

### Thirteenth Embodiment

Fig. 17 is a plan view of a radio IC device 113 according to a thirteenth embodiment. While the magnetic-field radiation electrode portion 20 is used as one side of the dipole antenna in the second frequency band in the example shown in Fig. 13(A), the radio IC device 113 shown in Fig. 17 includes electric-field radiation electrode portions 33 and 37 functioning as a dipole antenna in the second frequency band.

Thus, the electric-field radiation electrode portions 33 and 37 for transmitting and receiving an RF signal in the second frequency band are provided independently to the magnetic-field radiation electrode portion 20 for receiving (receiving as power) an RF signal in the first frequency band so that the antenna for the first frequency band and the antenna for the second frequency band can be independently set.

### Fourteenth Embodiment

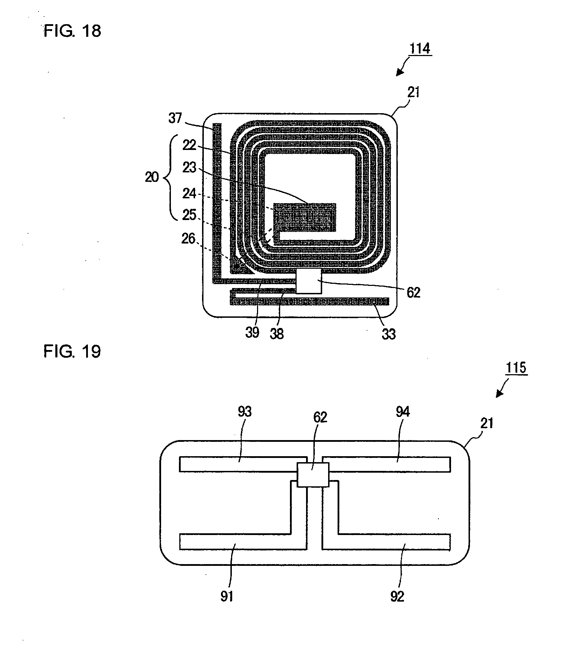

Fig. 18 is a plan view of a radio IC device 114 according to a fourteenth embodiment not forming part of the claimed invention. While the magnetic-field radiation electrode portion 20 is used as one side of the dipole antenna in the second frequency band in the example shown in Fig. 15(A), the radio IC device 114 shown in Fig. 18 includes electric-field radiation electrode portions 33 and 37 functioning as a dipole antenna in the second frequency band.

Lines 38 and 39 between the radio IC chip 62 and the electric-field radiation electrode portions 33 and 37 function as an inductor, connected to the root of the dipole antenna, for impedance matching and setting of resonant frequency.

Thus, the electric-field radiation electrode portions 33 and 37 for transmitting and receiving an RF signal in the second frequency band are provided independently to the magnetic-field radiation electrode portion 20 for receiving (receiving as power) an RF signal in the first frequency band so that the antenna for the first frequency band and the antenna for the second frequency band can be independently set.

### Fifteenth Embodiment

Fig. 19 is a plan view of a radio IC device 115 according to a fifteenth embodiment not forming part of the claimed invention. In the example shown in Fig. 19, electric-field radiation electrode portions 91 and 92 function as a first dipole antenna, whereas electric-field radiation electrode portions 93 and 94 function as a second dipole antenna.

The configuration of a radio IC chip 62 is similar to that shown in Fig. 15(C), and it includes a functional section for acquiring power by receiving an RF signal in the first frequency band and a functional section functioning as an RFID tag by transmitting and receiving an RF signal in the second frequency band.

The first dipole antenna is used to receive an RF signal in the first frequency band, whereas the second dipole antenna is used to transmit and receive an RF signal in the second frequency band.

In this way, the two antennas may each be formed of an electric-field radiation electrode portion.

Although an RF signal in the first frequency band is used for power reception in the ninth to fifteenth embodiments, an RF signal in the second frequency band may instead be used for power reception.

- 6: solder bump
- 13: inductor conductor
- 14: capacitor electrode
- 20: magnetic-field radiation electrode portion
- 21: substrate
- 22: line electrode portion
- 23: one-side electrode of capacitor electrode portion
- 24: other-side electrode of capacitor electrode portion
- 25: crossing line electrode
- 26: front-to-back connection portion
- 28: line-electrode extending portion
- 30: second RFID tag electromagnetic coupling module
- 31: second RFID tag radio IC
- 32: feed circuit board
- 34: radio IC chip
- 33, 37: electric-field radiation electrode portion
- 35, 36: power supply line
- 40: mounting substrate
- 41: ground electrode
- 42: nonground region
- 50: first RFID tag electromagnetic coupling module
- 51: first RFID tag radio IC
- 52: feed circuit board
- 54: radio IC chip
- 61: first radio IC chip
- 62: radio IC chip
- 71: capacitor
- 81: sensor chip
- 91, 92, 93, 94: electric-field radiation electrode portion
- 101 to 115: radio IC device

## Claims

1. A radio IC device comprising:
a radiation electrode (20, 20a, 20b, 33, 33a, 33b);
a first radio IC (50, 51, 61, 61B) electrically connected or electromagnetically coupled to the radiation electrode (20, 20a, 20b, 33, 33a, 33b) to receive an RF signal in a first frequency band for an RFID tag; and
a second radio IC (30, 31, 31B) electrically connected or electromagnetically coupled to the radiation electrode (20, 20a, 20b, 33, 33a, 33b) to transmit and receive an RF signal in a second frequency band for an RFID tag;
wherein the radiation electrode includes a first radiation electrode portion (20, 20a) for an RF signal in the first frequency band paired with a second radiation electrode portion (20b, 33, 33a, 33b) for an RF signal in the second frequency band, and wherein the second radio IC (30, 31, 31B) is electrically connected or magnetically coupled to the first and second radiation electrode portions (20, 20a, 20b, 33, 33a, 33b);
**characterized in that**
the first radio IC (50, 51, 61, 61B) comprises means (35, 36, 71) for rectifying the RF signal and supplying power to the second radio IC (30, 31, 31B).

2. The radio IC device according to Claim 1, wherein the first frequency band is lower than the second frequency band, and the first radiation electrode portion (20, 20a) is a magnetic-field radiation electrode portion having a resonant frequency higher than the first frequency band and functioning as a magnetic-field radiation electrode (20, 20a) for an RF signal in the first frequency band.

3. The radio IC device according to Claim 2, wherein the magnetic-field radiation electrode (20, 20a) portion is used to receive an RF signal in the first frequency band and to transmit and receive an RF signal in the second frequency band.

4. The radio IC device according to one of Claims 1 to 3, wherein the resonant frequency of the second radiation electrode portion (20b, 33, 33a, 33b) is lower than the second frequency band.

5. The radio IC device according to one of Claims 1 to 4, wherein the first radiation electrode portion (20, 20a) includes a line electrode (22, 22a) and capacitor electrodes (23, 23a, 24, 24a) forming a capacitor between ends of the line electrode (22, 22a).

6. The radio IC device according to Claim 5, wherein the capacitor electrodes include a one-side electrode (23, 23a) and an other-side electrode (24, 24a) disposed opposite each other with a dielectric layer (21) therebetween in a thickness direction, the line electrode (22, 22a) includes a spiral portion extending spirally around the capacitor electrodes (23, 23a, 24, 24a), the one-side electrode (23, 23a) is electrically connected to an inner end of the spiral portion of the line electrode (22, 22a), and a crossing line electrode (25, 25a) is provided so as to connect an outer end of the spiral portion of the line electrode (22, 22a) and the other-side electrode (24, 24a).

7. The radio IC device according to Claim 6, wherein the line electrode (22, 22a) has an electrode-removed region, the first radio IC (50, 51, 61, 61B) is mounted so as to be connected between ends of the line electrode (22, 22a) in the electrode-removed region, and the second radio IC (30, 31, 31B) is mounted so as to be connected to the crossing line electrode (25, 25a) near the outer end of the line electrode (22, 22a).

8. The radio IC device according to one of Claims 1 to 7, wherein the first and second radiation electrode portions (20a, 20b) each include a magnetic-field radiation electrode portion.

9. The radio IC device according to one of Claims 1 to 7, wherein the first radiation electrode portion (20) is a magnetic-field radiation electrode portion, and wherein the second radiation electrode portion is (33, 33a, 33b) is an electric-field radiation electrode portion paired with the magnetic-field radiation electrode portion (20) to constitute an equivalent dipole antenna together with the magnetic-field radiation electrode portion (20).

10. The radio IC device according to Claim 9, wherein the electric-field radiation electrode portion (33, 33a, 33b) is disposed outside a spiral portion of a line electrode (22) of the magnetic-field radiation electrode portion (20).

11. A radio IC device comprising:
a radiation electrode (20);
a first radio IC (50) electrically connected or electromagnetically coupled to the radiation electrode (20) to receive an RF signal in a first frequency band for an RFID tag; and
a second radio IC (30) electrically connected or electromagnetically coupled to the radiation electrode (20) to transmit and receive an RF signal in a second frequency band for an RFID tag;
wherein the radiation electrode (20) functions as radia-tion electrode for the first radio IC (50);
**characterized in that**
the second radio IC (30) is electrically connected or magnetically coupled to the radiation electrode (20) and to a ground electrode (41), wherein the radiation electrode (20) and the ground electrode (41) function as the radiation electrode for the second radio IC (30); and
the first radio IC (50) comprises means (35, 36, 71) for rectifying the RF signal and supplying power to the second radio IC (30).

12. The radio IC device according to one of Claims 1 to 11, wherein the first radio IC (50, 51, 61, 61B) and the second radio IC (30, 31, 31B) are configured in the same package.

13. The radio IC device according to one of Claims 1 to 12, wherein the first or second radio IC (30, 31, 31B, 50, 51, 61, 61B) is a radio IC chip electrically connected to the radia-tion electrode (20, 20a, 20b, 33, 33a, 33b).

14. The radio IC device according to one of Claims 1 to 12, wherein the first or second radio IC (30, 31, 31B) is an electromagnetic coupling module including a feed circuit board (32, 52) having a matching circuit including at least one inductor (13a-e) and a radio IC chip (34, 54) mounted on a top surface of the feed circuit board (32, 52) and electrically connected to the matching circuit.

15. The radio ICdevice according to one of Claims 1 to 14, wherein a battery or capacitor for accumulating the power output from the first radio IC (50, 51, 61, 61B) is provided.

## Patentansprüche

1. Ein Funk-IC-Bauelement, das folgende Merkmale aufweist:
eine Strahlungselektrode (20, 20a, 20b, 33, 33a, 33b);
eine erste Funk-IC (50, 51, 61, 61 B), die mit der Strahlungselektrode (20, 20a, 20b, 33, 33a, 33b) elektrisch verbunden oder elektromagnetisch gekoppelt ist, um ein HF-Signal in einem ersten Frequenzband für eine RFID-Kennung zu empfangen; und
eine zweite Funk-IC (30, 31, 31 B), die mit der Strahlungselektrode (20, 20a, 20b, 33, 33a, 33b) elektrisch verbunden oder elektromagnetisch gekoppelt ist, um ein HF-Signal in einem zweiten Frequenzband für eine RFID-Kennung zu senden und zu empfangen;
wobei die Strahlungselektrode einen ersten Strahlungselektrodenabschnitt (20, 20a) für ein HF-Signal in dem ersten Frequenzband, gepaart mit einem zweiten Strahlungselektrodenabschnitt (20b, 33, 33a, 33b) für ein HF-Signal in dem zweiten Frequenzband, umfasst, und wobei die zweite Funk-IC (30, 31, 31 B) mit dem ersten und dem zweiten Strahlungselektrodenabschnitt (20, 20a, 20b, 33, 33a, 33b) elektrisch verbunden oder magnetisch gekoppelt ist;
**dadurch gekennzeichnet, dass**:
die erste Funk-IC (50, 51, 61, 61 B) eine Einrichtung (35, 36, 71) zum Gleichrichten des HF-Signals und Liefern von Leistung an die zweite Funk-IC (30, 31, 31 B) aufweist.

2. Das Funk-IC-Bauelement gemäß Anspruch 1, bei dem das erste Frequenzband niedriger ist als das zweite Frequenzband und der erste Strahlungselektrodenabschnitt (20, 20a) ein Magnetfeld-Strahlungselektrodenabschnitt mit einer Resonanzfrequenz ist, die höher ist als das erste Frequenzband, und der als eine MagnetfeldStrahlungselektrode (20, 20a) für ein HF-Signal in dem ersten Frequenzband fungiert.

3. Das Funk-IC-Bauelement gemäß Anspruch 2, bei dem der Abschnitt der Magnetfeld-Strahlungselektrode (20, 20a) verwendet wird, um ein HF-Signal in dem ersten Frequenzband zu empfangen und ein HF-Signal in dem zweiten Frequenzband zu senden und zu empfangen.

4. Das Funk-IC-Bauelement gemäß einem der Ansprüche 1 bis 3, bei dem die Resonanzfrequenz des zweiten Strahlungselektrodenabschnitts (20b, 33, 33a, 33b) niedriger ist als das zweite Frequenzband.

5. Das Funk-IC-Bauelement gemäß einem der Ansprüche 1 bis 4, bei dem der erste Strahlungselektrodenabschnitt (20, 20a) eine Leitungselektrode (22, 22a) und Kondensatorelektroden (23, 23a, 24, 24a) umfasst, die einen Kondensator zwischen Enden der Leitungselektrode (22, 22a) bilden.

6. Das Funk-IC-Bauelement gemäß Anspruch 5, bei dem die Kondensatorelektroden eine Eine-Seite-Elektrode (23, 23a) und eine Andere-Seite-Elektrode (24, 24a) umfasst, die gegenüber voneinander angeordnet sind, wobei sich zwischen denselben in einer Dickenrichtung eine dielektrische Schicht (21) befindet, wobei die Leitungselektrode (22, 22a) einen Spiralabschnitt umfasst, der sich spiralförmig um die Kondensatorelektroden (23, 23a, 24, 24a) herum erstreckt, wobei die Eine-Seite-Elektrode (23, 23a) elektrisch mit einem inneren Ende des Spiralabschnitts der Leitungselektrode (22, 22a) verbunden ist, und wobei eine Kreuzleitungselektrode (25, 25a) vorgesehen ist, um ein äußeres Ende des Spiralabschnitts der Leitungselektrode (22, 22a) und die Andere-Seite-Elektrode (24, 24a) zu verbinden.

7. Das Funk-IC-Bauelement gemäß Anspruch 6, bei dem die Leitungselektrode (22, 22a) eine Region mit Elektrodenentfernung aufweist, die erste Funk-IC (50, 51, 61, 61 B) so angebracht ist, dass sie zwischen Enden der Leitungselektrode (22, 22a) in der Region mit Elektrodenentfernung geschaltet ist, und die zweite Funk-IC (30, 31, 31 B) so angebracht ist, dass sie mit der Kreuzleitungselektrode (25, 25a) nahe dem äußeren Ende der Leitungselektrode (22, 22a) verbunden ist.

8. Das Funk-IC-Bauelement gemäß einem der Ansprüche 1 bis 7, bei dem der erste und der zweite Strahlungselektrodenabschnitt (20a, 20b) jeweils einen Magnetfeld-Strahlungselektrodenabschnitt umfassen.

9. Das Funk-IC-Bauelement gemäß einem der Ansprüche 1 bis 7, bei dem der erste Strahlungselektrodenabschnitt (20) ein Magnetfeld-Strahlungselektrodenabschnitt ist, und bei dem der zweite Strahlungselektrodenabschnitt (33, 33a, 33b) ein Elektrisches-Feld-Strahlungselektrodenabschnitt ist, gepaart mit dem Magnetfeldstrahlungselektrodenabschnitt (20), um gemeinsam mit dem Magnetfeld-Strahlungselektrodenabschnitt (20) eine äquivalente Bipolantenne zu bilden.

10. Das Funk-IC-Bauelement gemäß Anspruch 9, bei dem der Elektrisches-Feld-Strahlungselektrodenabschnitt (33, 33a, 33b) außerhalb eines Spiralabschnitts einer Leitungselektrode (22) des Magnetfeld-Strahlungselektrodenabschnitts (20) angeordnet ist.

11. Ein Funk-IC-Bauelement, das folgende Merkmale aufweist:
eine Strahlungselektrode (20);
eine erste Funk-IC (50), die mit der Strahlungselektrode (20) elektrisch verbunden oder elektromagnetisch gekoppelt ist, um ein HF-Signal in einem ersten Frequenzband für eine RFID-Kennung zu empfangen; und
eine zweite Funk-IC (30), die mit der Strahlungselektrode (20) elektrisch verbunden oder elektromagnetisch gekoppelt ist, um ein HF-Signal in einem zweiten Frequenzband für eine RFID-Kennung zu senden und zu empfangen;
wobei die Strahlungselektrode (20) als Strahlungselektrode für die erste Funk-IC (50) fungiert;
**dadurch gekennzeichnet, dass**:
die zweite Funk-IC (30) mit der Strahlungselektrode (20) und mit einer Masseelektrode (41) elektrisch verbunden oder magnetisch gekoppelt ist, wobei die Strahlungselektrode (20) und die Masseelektrode (41) als die Strahlungselektrode für die zweite Funk-IC (30) fungieren; und
die erste Funk-IC (50) eine Einrichtung (35, 36, 71) zum Gleichrichten des HF-Signals und Liefern von Leistung an die zweite Funk-IC (30) aufweist.

12. Das Funk-IC-Bauelement gemäß einem der Ansprüche 1 bis 11, bei dem die erste Funk-IC (50, 51, 61, 61 B) und die zweite Funk-IC (30, 31, 31 B) in dem gleichen Gehäuse ausgebildet sind.

13. Das Funk-IC-Bauelement gemäß einem der Ansprüche 1 bis 12, bei dem die erste oder die zweite Funk-IC (30, 31, 31 B, 50, 51, 61, 61 B) ein Funk-IC-Chip ist, der mit der Strahlungselektrode (20, 20a, 20b, 33, 33a, 33b) elektrisch verbunden ist.

14. Das Funk-IC-Bauelement gemäß einem der Ansprüche 1 bis 12, bei dem die erste oder die zweite Funk-IC (30, 31, 31 B) ein elektromagnetisches Kopplungsmodul ist, das eine Speisungsschaltungsplatine (32, 52) mit einer Anpassungsschaltung, die zumindest einen Induktor (13a-e) umfasst, sowie einen Funk-IC-Chip (34, 54), der an einer oberen Oberfläche der Speisungsschaltungsplatine (32, 52) angebracht und mit der Anpassungsschaltung elektrisch verbunden ist, umfasst.

15. Das Funk-IC-Bauelement gemäß einem der Ansprüche 1 bis 14, bei dem eine Batterie oder ein Kondensator zum Ansammeln der Leistungsausgabe aus der ersten Funk-IC (50, 51, 61, 61 B) vorgesehen ist.

## Revendications

1. Dispositif à circuit intégré radio comportant :
une électrode de rayonnement (20, 20a, 20b, 33, 33a, 33b) ;
un premier circuit intégré radio (50, 51, 61, 61B) relié électriquement ou électromagnétiquement couplé à l'électrode de rayonnement (20, 20a, 20b, 33, 33a, 33b) pour recevoir un signal RF dans une première bande de fréquences pour une étiquette RFID ; et
un second circuit intégré radio (30, 31, 31B) relié électriquement ou couplé électromagnétiquement à l'électrode de rayonnement (20, 20a, 20b, 33, 33a, 33b) pour transmettre et recevoir un signal RF dans une seconde bande de fréquences pour une étiquette RFID ;
dans lequel l'électrode de rayonnement comprend une première partie d'électrode de rayonnement (20, 20a) pour un signal RF dans une première bande de fréquences appariée avec une seconde partie d'électrode de rayonnement (20b, 33, 33a, 33b) pour un signal RF dans la seconde bande de fréquences, et dans lequel le second circuit intégré radio (30, 31, 31b) est électriquement relié ou couplé magnétiquement aux première et seconde parties d'électrode de rayonnement (20, 20a, 20b, 33, 33a, 33b) ;
**caractérisé en ce que**
le premier circuit intégré radio (50, 51, 61, 61B) comporte des moyens (35, 36, 71) pour rectifier le signal RF et délivrer de l'énergie au second circuit intégré radio (30, 31, 31B).

2. Dispositif à circuit intégré radio selon la revendication 1, dans lequel la première bande de fréquences est inférieure à la seconde bande de fréquences, et la première partie d'électrode de rayonnement (20, 20a) est une partie d'électrode de rayonnement à champ magnétique possédant une fréquence résonnante plus élevée que la première bande de fréquences et fonctionnant en tant qu'électrode de rayonnement à champ magnétique (20, 20a) pour un signal RF dans la première bande de fréquences.

3. Dispositif à circuit intégré radio selon la revendication 2, dans lequel la partie d'électrode de rayonnement à champ magnétique (20, 20a) est utilisée pour recevoir un signal RF dans la première bande de fréquences et pour transmettre et recevoir un signal RF dans la seconde bande de fréquences.

4. Dispositif à circuit intégré radio selon l'une quelconque des revendications 1 à 3, dans lequel la fréquence résonnante de la seconde partie d'électrode de rayonnement (20b, 33, 33a, 33b) est inférieure à la seconde bande de fréquences.

5. Dispositif à circuit intégré radio selon l'une quelconque des revendications 1 à 4, dans lequel la première partie d'électrode de rayonnement (20, 20a) comprend une électrode de ligne (22, 22a) et des électrodes de condensateur (23, 23a, 24, 24a) formant un condensateur entre les extrémités de l'électrode de ligne (22, 22a).

6. Dispositif à circuit intégré radio selon la revendication 5, dans lequel les électrodes de condensateur comprennent une électrode sur un côté (23, 23a) et une électrode sur l'autre côté (24, 24a) disposées vis-à-vis avec une couche diélectrique (21) entre elles dans la direction de l'épaisseur, l'électrode de ligne (22, 22a) comprend une partie en spirale s'étendant en spirale autour des électrodes de condensateur (23, 23a, 24, 24a), l'électrode sur un côté (23, 23a) est électriquement reliée à une extrémité interne de la partie en spirale de l'électrode de ligne (22, 22a), et une électrode de ligne de croisement (25, 25a) est prévue de manière à relier une extrémité extérieure de la partie en spirale de l'électrode de ligne (22, 22a) et l'électrode sur l'autre côté (24, 24a).

7. Dispositif à circuit intégré radio selon la revendication 6, dans lequel l'électrode de ligne (22, 22a) possède une région sans électrode, le premier circuit intégré radio (50, 51, 61, 61B) est monté de manière à être relié entre les extrémités de l'électrode de ligne (22, 22a) dans la région sans électrode, et le second circuit intégré radio (30, 31, 31B) est monté de manière à être relié à l'électrode de ligne de croisement (25, 25a) près de l'extrémité extérieure de l'électrode de ligne (22, 22a).

8. Dispositif à circuit intégré radio selon l'une quelconque des revendications 1 à 7, dans lequel les première et seconde parties d'électrode de rayonnement (20a, 20b) comprennent chacune une partie d'électrode de rayonnement à champ magnétique.

9. Dispositif à circuit intégré radio selon l'une quelconque des revendications 1 à 7, dans lequel la première partie d'électrode de rayonnement (20) est une partie d'électrode de rayonnement à champ magnétique, et dans lequel la seconde partie d'électrode de rayonnement (33, 33a, 33b) est une partie d'électrode de rayonnement à champ électrique appariée avec la partie d'électrode de rayonnement à champ magnétique (20) pour constituer une antenne dipôle équivalente conjointement avec la partie d'électrode de rayonnement à champ magnétique (20).

10. Dispositif à circuit intégré radio selon la revendication 9, dans lequel la partie d'électrode de rayonnement à champ électrique (33, 33a, 33b) est disposée à l'extérieur d'une partie en spirale de l'électrode de ligne (22) de la partie d'électrode de rayonnement à champ magnétique (20).

11. Dispositif à circuit intégré radio comportant :
une électrode de rayonnement (20) ;
un premier circuit intégré radio (50) relié électriquement ou couplé électromagnétiquement à l'électrode de rayonnement (20) pour recevoir un signal RF dans une première bande de fréquences pour une étiquette RFID ; et
un second circuit intégré radio (30) relié électriquement ou couplé magnétiquement à l'électrode de rayonnement (20) pour transmettre et recevoir un signal RF dans une seconde bande de fréquences pour une étiquette RFID;
dans lequel l'électrode de rayonnement (20) fonctionne comme une électrode de rayonnement pour le premier circuit intégré radio (50);
**caractérisé en ce que**
le second circuit intégré radio (30) est électriquement relié ou couplé magnétiquement à l'électrode de rayonnement (20) et à une électrode de masse (41), dans lequel l'électrode de rayonnement (20) et l'électrode de masse (41) fonctionnent en tant qu'électrode de rayonnement pour le second circuit intégré radio (30) ; et
le premier circuit intégré radio (50) comporte des moyens (35, 36, 71) pour rectifier le signal RF et délivrer de l'énergie au second circuit intégré radio (30).

12. Dispositif à circuit intégré radio selon l'une quelconque des revendications 1 à 11, dans lequel le premier circuit intégré radio (50, 51, 61, 61B) et le second circuit intégré radio (30, 31, 31B) sont configurés dans le même boîtier.

13. Dispositif à circuit intégré radio selon l'une quelconque des revendications 1 à 12, dans lequel le premier ou le second circuit intégré radio (30, 31, 31B, 50, 51, 61, 61B) est une puce de circuit intégré radio électriquement reliée à l'électrode de rayonnement (20, 20a, 20b, 33, 33a, 33b).

14. Dispositif à circuit intégré radio selon l'une quelconque des revendications 1 à 12, dans lequel le premier ou second circuit intégré radio (30, 31, 31B) est un module de couplage électromagnétique comprenant une carte de circuit d'alimentation (32, 52) possédant un circuit de correspondance comprenant au moins un inducteur (13a-e) et une puce de circuit intégré radio (34, 54) montée sur une surface supérieure de la carte de circuit d'alimentation (32, 52) et électriquement reliée au circuit de correspondance.

15. Dispositif à circuit intégré radio selon l'une quelconque des revendications 1 à 14, dans lequel une batterie ou un condensateur pour accumuler l'énergie délivrée depuis le premier circuit intégré radio (50, 51, 61, 61B) est prévu.
